# EUROPÄISCHE PATENTSCHRIFT

(11) **EP 3 938 640 B1**
(45) Veröffentlichungstag und Bekanntmachung des Hinweises auf die Patenterteilung: **29.11.2023**
(21) Anmeldenummer: 19713342.4
(22) Anmeldetag: 13.03.2019
(51) Int. Cl.: F02M 21/02, F02B 37/00, F02D 19/02, F02D 7/00, F02D 41/00, F02D 33/00, F02D 41/12, F02M 37/00

(54) **BRENNKRAFTMASCHINE**
INTERNAL COMBUSTION ENGINE
MOTEUR À COMBUSTION INTERNE

(43) Veröffentlichungstag der Anmeldung: 19.01.2022
(73) Patentinhaber: Innio Jenbacher GmbH & Co OG, 6200 Jenbach (AT)
(72) Erfinder: MAIRHOFER, Alexander, 6335 Thiersee (AT); HUBER, Johannes, 6233 Kramsach (AT); THALHAUSER, Josef, 83191 Nußdorf (DE); GROTZ, Matthias, 6020 Innsbruck (AT); LITZLFELLNER, Michael Franz, 6271 Uderns (AT); GASTEIGER, Alexander, 6300 Wörgl (AT); PERKTOLD, Michael, 6633 Biberwier (AT)
(74) Vertreter: Torggler & Hofmann Patentanwälte - Innsbruck
(86) Internationale Anmeldenummer: PCT/AT2019/060083
(87) Internationale Veröffentlichungsnummer: WO 2020/181302

(56) Entgegenhaltungen:
- EP-A1- 1 058 060
- WO-A1-00/79164
- DE-A1- 3 149 839
- DE-A1-102013 218 690

## Beschreibung

Die vorliegende Erfindung betrifft eine Brennkraftmaschine mit den Merkmalen des Oberbegriffs des Anspruchs 1.

Gattungsgemäße Brennkraftmaschinen weisen zumindest einen Brennraum, zumindest eine Treibstoffzufuhrleitung zum Zuführen von - vorzugsweise gasförmigem - Treibstoff zum zumindest einen Brennraum sowie zumindest ein vergleichendes Drucksteuerventil zum Steuern eines Drucks in der zumindest einen Treibstoffzufuhrleitung auf, wobei das zumindest eine vergleichende Drucksteuerventil dazu ausgebildet ist, auf Basis eines Druckunterschieds zwischen der zumindest einen Treibstoffzufuhrleitung und einem Referenzvolumen, in welchem ein Referenzdruck herrscht, eine Ventilöffnungsbewegung oder eine Ventilschließbewegung auszuführen.

Im Folgenden werden der Stand der Technik und die Aufgabenstellung der Erfindung anhand eines luftaufgeladenen Gasmotors beschrieben. Die Aussagen gelten aber allgemein bei Brennkraftmaschinen mit einer Treibstoffzufuhrleitung, wobei der Druck in der Treibstoffzufuhrleitung mittels eines vergleichenden Drucksteuerventils gesteuert wird.

Beim Zuführen der Ladeluft und des Treibstoffs zum Brennraum darf das Verhältnis zwischen dem Druck in der Treibstoffzufuhrleitung und dem Ladedruck weder zu groß noch zu klein werden. Andernfalls stellt sich im Brennraum ein Missverhältnis aus Ladeluft und Treibstoff ein. Besonders bei einem Lastabwurf, d.h. einer - relativ schnellen - Verringerung der von der Brennkraftmaschine zu leistenden Leistung, kann dies die Steuerung des Drucks in der Treibstoffzufuhrleitung vor Herausforderungen stellen, da sich der Ladedruck naturgemäß sehr schnell senken und dadurch an die verringerte Leistung anpassen wird. D.h. die Steuerung des Drucks in der Treibstoffzufuhrleitung reagiert meist langsamer als der Ladedruck.

Dazu ist zu erwähnen, dass sich mit (graduell) erhöhender Leistung auch der Ladedruck und der Druck in der zumindest einen Treibstoffzufuhrleitung entsprechend erhöhen werden.

Bei größeren Lastabwürfen kann aufrund des im Vergleich zum Ladedruck langsamer sinkenden Drucks in der Treibstoffzufuhrleitung das Druckverhältnis dieser beiden Größen ein Limit übersteigen, ab welchem die Direkteinspritz- bzw. Direkteinblaseventile (engl: port injection valves) nicht mehr öffnen können, was folglich zum Aussetzen der Verbrennung führt. Dieser ungewünschte Zustand kann mehrere Sekunden andauern.

Eine Lösung für eine ähnliche Problematik ist in der EP 3 048 279 A1 offenbart, wobei dabei aber nur Maßnahmen gelehrt werden, die das Gasvolumen in der Treibstoffzufuhrleitung direkt beeinflussen.

Weitere aus dem Stand der Technik bekannte Ausführungsformen gehen beispielsweise aus der DE 31 49 839 A1, der DE 10 2013 218 690 A1 oder der EP 1 058 060 A1 hervor.

Aufgabe der vorliegenden Erfindung ist es, eine Brennkraftmaschine mit vergleichendem Drucksteuerventil bereitzustellen, welche bei Lastabwürfen eine schnellere Steuerung des Drucks in der Treibstoffzufuhrleitung erlaubt.

Diese Aufgabe wird durch die Merkmale des Anspruchs 1 gelöst. Dies geschieht, indem zumindest ein vom zumindest einen vergleichenden Drucksteuerventil separates Entlastungsventil vorgesehen ist, welches dazu ausgebildet ist, durch Öffnen eine Druckentlastung im Referenzvolumen und damit eine Verringerung des Referenzdrucks zu bewirken, wenn eine von der Brennkraftmaschine zu leistende Leistung sinkt, insbesondere wenn eine von der Brennkraftmaschine zu erbringende Leistung im Wesentlichen abrupt nicht mehr erbracht werden muss (Lastabwurf).

Die Erkenntnis der Erfindung liegt also darin, dass das zumindest eine vergleichende Drucksteuerventil durchaus in der Lage ist, den Druck in der Treibstoffzufuhrleitung (engl: rail) schnell genug zu steuern, wenn der Druck im Referenzvolumen, insbesondere einem pilotgesteuertem Druck im Referenzvolumen, schnell genug angepasst wird.

Mechanisch angesteuerte Aktuatoren werden im vorliegenden Dokument als "gesteuert" bezeichnet, auch wenn eine mechanische Rückkopplung vorgesehen ist. Der Ausdruck "Regelung" ist einer elektronischen Regelung vorbehalten.

Bevorzugt kann das Referenzvolumen ein durchströmtes Volumen, insbesondere mit pilotgesteuertem Referenzdruck, sein. Auch ein statisches Referenzvolumen ist aber im Prinzip denkbar.

Das zumindest eine vergleichende Drucksteuerventil (in der Folge auch nur als Drucksteuerventil bezeichnet) kann bevorzugt so ausgeführt sein, dass eine Ventilöffnungsbewegung ausgeführt wird, wenn der Referenzdruck höher als ein momentaner Druck in der Treibstoffzufuhrleitung ist, und dass eine Ventilschließbewegung ausgeführt wird, wenn der Referenzdruck niedriger als ein momentaner Druck in der Treibstoffzufuhrleitung ist. In ersterem Fall wird die Ventilöffnungsbewegung zu einem erhöhten Volumenstrom durch das Drucksteuerventil führen, was zu einem erhöhten und besser an den Referenzdruck angepassten Druck in der Treibstoffzufuhrleitung führt, und umgekehrt.

Zum Ausführen der Ventilöffnungsbewegung und der Ventilschließbewegung können ein Ventilkörper und/oder ein Ventilsitz im zumindest einen Treibstoffzufuhrventil angeordnet und relativ zueinander bewegbar sein.

Der Druck in der zumindest einen Treibstoffzufuhrleitung bezieht sich stets auf den durch das zumindest eine vergleichende Drucksteuerventil gesteuerten Druck stromabwärts des zumindest einen vergleichenden Drucksteuerventils.

Vorteilhafte Weiterbildungen der Erfindung sind in den abhängigen Ansprüchen definiert.

Das zumindest eine Entlastungsventil kann bevorzugt so angeordnet sein, dass das Referenzvolumen im geöffneten Zustand des zumindest einen Entlastungsventils in Fluidkommunikation mit der Umgebung steht. Durch die Entlastung gegenüber der Umgebung und damit gegenüber Umgebungsdruck von etwa 1 bar können auch Drucküberschüsse von mehr als 1 bar im Referenzvolumen schnell abgebaut werden.

Alternativ oder zusätzlich kann das durchströmte Referenzvolumen eine Drossel - vorzugsweise eine Blende - zum Drosseln eines Volumenstroms beinhalten und das zumindest eine Entlastungsventil kann in einer Drosselumgehungsleitung um die Drossel angeordnet sein.

Es kann eine, bevorzugt elektronische, Steuer- oder Regeleinrichtung für die Brennkraftmaschine vorgesehen sein.

Besonders bevorzugt kann das zumindest eine Entlastungsventil mittels der Steuer- oder Regeleinrichtung elektronisch ansteuerbar sein. Somit kann die Druckentlastung im Referenzvolumen besonders einfach erreicht werden, wenn die Information über einen Lastabwurf in der Steuer- oder Regeleinrichtung, beispielsweise detektiert über mit der Steuer- oder Regeleinrichtung verbundene Sensoren, vorliegt.

So findet eine Druckentlastung in der Umgehungsleitung also unter anderem dann statt, wenn der Soll-Druck im Referenzvolumen zu hoch ist. Besonders vorteilhaft ist eine Druckentlastung über das Entlastungsventil bei großen Lastabwürfen, wodurch eine rasche Absenkung des Referenzdrucks und folglich eine ebenso rasche Absenkung des Drucks in der Treibstoffzufuhrleitung gewährleistet wird.

Unter "großen Lastabwürfen" ist in diesem Kontext gemeint, dass die Brennkraftmaschine abrupt nur noch einen Bruchteil, d.h. beispielsweise weniger als 80% der zuvor erbrachten Leistung, bevorzugt jedoch weniger als 50% der zuvor erbrachten Leistung bereitstellen muss.

In einer erfindungsgemäßen Ausführungsform ist der Referenzdruck im Referenzvolumen mittels eines vom Entlastungsventil separaten Pilotsteuerventils steuerbar oder regelbar sein, wobei vorzugsweise eine elektronische Ansteuerung, insbesondere durch die erwähnte Steuer- oder Regeleinrichtung, des Pilotsteuerventils gemäß einem Soll-Wert vorgesehen ist.

Es ist vorgesehen, dass das Pilotsteuerventil in einer Umgehungsleitung des zumindest einen vergleichenden Drucksteuerventils angeordnet sein, wobei die Umgehungsleitung stromaufwärts und vorzugsweise stromabwärts des zumindest einen Drucksteuerventils mit der zumindest einen Treibstoffzufuhrleitung fluidverbunden ist. Auf diese Weise kann besonders einfach ein durchströmtes Referenzvolumen bereitgestellt werden, indem als Medium für den Referenzdruck im Referenzvolumen das Medium aus der zumindest einen Treibstoffzufuhrleitung verwendet wird.

Das Pilotsteuerventil regelt den Volumenstrom in der Umgehungsleitung und damit den Druck im Referenzvolumen, wobei der Druck im Referenzvolumen bei höherem Volumenstrom steigt und bei geringerem Volumenstrom sinkt (abhängig von der Drosselventil-Stellung).

Es kann zumindest ein Turbolader, welcher insbesondere eine auf einen Ladedruck aufgeladene Ladeluft für die zumindest eine Brennkammer erzeugt, vorgesehen sein.

Die Steuer- oder Regeleinrichtung kann dazu ausgebildet sein, den Soll-Wert für das Ansteuern des Pilotsteuerventils auf Basis eines durch den Turbolader erzeugten Ladedrucks vorzugeben. Auf diese Weise kann ein gutes Verhältnis zwischen dem Druck in der Treibstoffzufuhrleitung und dem Ladedruck auf einfache Weise erzielt werden.

Das zumindest eine vergleichende Drucksteuerventil kann als mechanisch angesteuertes Drucksteuerventil ausgebildet sein.

Das zumindest eine vergleichende Drucksteuerventil kann eine zweigeteilte Druckkammer aufweisen, wobei ein erstes Teilvolumen der Druckkammer mit der zumindest einen Treibstoffzufuhrleitung fluidverbunden ist und ein zweites Teilvolumen der Druckkammer Teil des Referenzvolumens ist.

In einem solchen Fall kann das Referenzvolumen beispielswiese durch das zweite Teilvolumen zusammen mit Leitungsteilen, die beispielsweise stromabwärts des Pilotsteuerventils angeordnet sind, gebildet sein.

Die Zweiteilung der Druckkammer kann durch eine - vorzugsweise federbelastete - bewegliche Trennwand realisiert sein, wobei die Trennwand mit einem Ventilkörper oder einem Ventilsitz des zumindest einen vergleichenden Drucksteuerventils bewegungsgekoppelt ist.

Selbstverständlich sind auch andere Ausführungen des Drucksteuerventils, beispielsweise mit hydraulischen Kolben oder Hebelanordnungen, denkbar.

Es kann vorgesehen sein, dass die Fluidverbindung zwischen dem ersten Teilvolumen der Druckkammer und der zumindest einen Treibstoffzufuhrleitung durch eine Steuerleitung realisiert ist, welche das erste Teilvolumen der Druckkammer stromabwärts des Ventilsitzes und des Ventilkörpers mit dem der zumindest einen Treibstoffzufuhrleitung fluidverbindet.

Eine Treibstoffzufuhr zum zumindest einen Brennraum kann mittels zumindest eines Direkteinspritzventils (wird auch als Direkteinblasventil bezeichnet) realisiert sein, wobei das zumindest eine Direkteinspritzventil oder Direkteinblasventil zur Treibstoffversorgung mit der zumindest einen Treibstoffzufuhrleitung fluidverbunden ist.

Der zumindest eine Brennraum kann eine Kolben-Zylinder-Einheit und/oder eine Vorkammer für eine Kolben-Zylinder-Einheit beinhalten.

Bei der erfindungsgemäßen Brennkraftmaschine kann es sich um einen Gasmotor handeln.

Die erfindungsgemäße Brennkraftmaschine kann einen Hubkolbenmaschine mit beliebig vielen Kolben-Zylinder-Einheiten sein.

Die Brennkraftmaschine kann Teil eines Gensets - also einer Kombination einer Brennkraftmaschine mit einem davon angetriebenen Generator zum Erzeugen elektrischer Energie - sein.

Weitere Vorteile und Einzelheiten der Erfindung ergeben sich aus den Figuren und der dazu gehörigen Figurenbeschreibung. Dabei zeigen:
- Fig. 1: ein schematisch dargestelltes Ausführungsbeispiel der Erfindung und
- Fig. 2: eine schematische Übersichtsdarstellung einer erfindungsgemäßen Brennkraftmaschine.

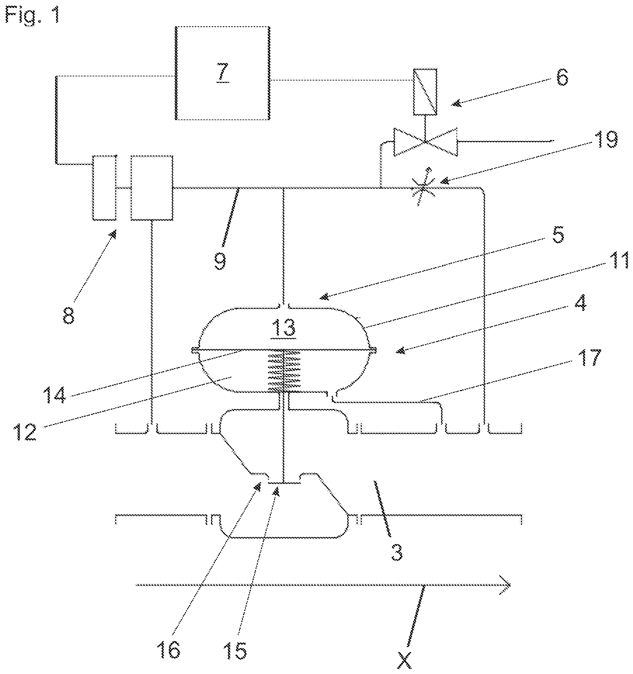

In Fig. 1 ist zunächst die zumindest eine Treibstoffzufuhrleitung 3 dargestellt, die in der durch den Pfeil mit Bezugszeichen X verdeutlichten Strömungsrichtung durchströmt wird. Der Druck in der zumindest einen Treibstoffzufuhrleitung 3 wird mittels eines vergleichenden Drucksteuerventils 4 gesteuert. Zu diesem Zweck ist eine Druckkammer 11 (engl.: pressure regulator dome) vorhanden, die in ein erstes Teilvolumen 12 und in ein zweites Teilvolumen 13 geteilt ist. Für die Teilung sorgt eine federbelastete, beweglich gelagerte Trennwand 14.

Das erste Teilvolumen 12 ist mit der zumindest einen Treibstoffzufuhrleitung 3 fluidverbunden, d. h. im ersten Teilvolumen 12 herrscht im Wesentlichen der gleiche Druck wie in der zumindest einen Treibstoffzufuhrleitung 3. Die Fluidverbindung zwischen der zumindest einen Treibstoffzufuhrleitung 3 und dem ersten Teilvolumen 12 der Druckkammer 11 ist über eine Steuerleitung 17 gelöst, welche stromabwärts eines Ventilkörpers 15 und eines Ventilsitzes 16 mit der zumindest einen Treibstoffzufuhrleitung 3 verbunden ist.

Das zweite Teilvolumen 13 ist Teil eines Referenzvolumens 5, in welchem ein Referenzdruck herrscht. Das Steuern des Referenzdrucks wird etwas weiter unten beschrieben.

Der in diesem Ausführungsbeispiel tellerförmige Ventilkörper 15 ist über eine Stange mit der Trennwand 14 bewegungsgekoppelt. Druckunterschiede zwischen dem ersten Teilvolumen 12 und dem zweiten Teilvolumen 13 bewirken Bewegungen der federbelasteten Trennwand 14 (engl.: diaphragm), welche in weiterer Folge zu Relativbewegungen des Ventilkörpers 15 zum in der zumindest einen Treibstoffzufuhrleitung 3 angeordneten Ventilsitz 16 führen.

Herrscht im zweiten Teilvolumen 13 ein höherer Referenzdruck als der Druck in der zumindest einen Treibstoffzufuhrleitung 3, bewegt sich die Trennwand 14 nach unten, wodurch der Ventilkörper 15 eine Öffnungsbewegung ausführt, was in weiterer Folge zum Angleichen des Drucks in der zumindest einen Treibstoffzufuhrleitung 3 an den Referenzdruck führt. Umgekehrt führt natürlich auch ein Druck in der zumindest einen Treibstoffzufuhrleitung 3, welcher größer ist als der Referenzdruck, zu einer Schließbewegung des Ventilkörpers 15 und auch in diesem Fall zum Angleichen des Drucks in der zumindest einen Treibstoffzufuhrleitung 3 an den Referenzdruck im zweiten Teilvolumen 13.

Zur Bereitstellung des Referenzvolumens 5 ist eine Umgehungsleitung 9 der zumindest einen Treibstoffzufuhrleitung 3 um das vergleichende Drucksteuerventil 4 herum vorgesehen. In dieser Umgehungsleitung 9 ist zunächst ein Pilotsteuerventil 8 vorhanden. Das Pilotsteuerventil 8 steuert den Referenzdruck, welcher stromabwärts des Pilotsteuerventils 8 und damit auch in dem zweiten Teilvolumen 13 herrscht, welches mit der Umgehungsleitung 9 fluidverbunden ist. Die Leitungsteile stromabwärts des Pilotsteuerventils 8 der Umgehungsleitung 9 sowie der zweite Volumenteil 13 der Druckkammer 11 bildet demnach das Referenzvolumen 5.

Es ist eine elektronische Steuer- oder Regeleinrichtung 7 vorgesehen, welche mit dem Pilotsteuerventil 8 verbunden ist. Über diese Verbindung wird ein Sollwert für den Referenzdruck vorgegeben, welcher beispielsweise auf Basis von Soll- oder Istwerten für den Ladedruck oder die Leistung der Brennkraftmaschine bestimmt wird.

Das Pilotsteuerventil 8 ist zweigeteilt, dargestellt mit einem in der Darstellung linken Input-Output-Teil zum Umwandeln des elektronisch vorgegebenen Sollwerts in eine mechanische Aktuatorbewegung und einem zweiten rechts dargestellten mechanischen Teil.

Erfindungsgemäß vorgesehen ist das Entlastungsventil 6, welches in der vorliegenden Ausführungsform ebenfalls durch die Steuer- oder Regeleinrichtung 7 angesteuert wird. Im Falle eines Leistungsabwurfs passt die Steuer- oder Regeleinrichtung 7 nicht nur den Sollwert für die Pilotsteuerung im Referenzvolumen 5 an, sondern öffnet auch das Entlastungsventil 6. Damit wird das Referenzvolumen 5 gegen die Umgebung geöffnet, wodurch der Referenzdruck im Referenzvolumen 5 schnell sinken kann, insbesondere ähnlich schnell wie der Ladedruck beim Lastabwurf sinkt.

Dies hat zur Folge, dass das vergleichende Drucksteuerventil 4 nur mit geringer Verzögerung eine Schließbewegung des Ventilkörpers 15 ausführt, wodurch der Druck in der zumindest einen Treibstoffzufuhrleitung 3 ebenso schnell sinkt wie der Ladedruck.

Ein in der Umgehungsleitung 9 und stromabwärts des Pilotventils 9 befindliches Ventil 19 übernimmt im Wesentlichen die Funktion einer Drossel (Drosselventil), mit welchem ein veränderlicher Strömungswiderstand induziert und folglich ein veränderlicher Referenzdruck aufgebaut werden kann. Im Falle eines erhöhten Strömungswiderstandes, steigt der Druck im zweiten Teilvolumen 13 an, was eine Bewegung der Trennwand 14 entgegen der Federkraft und folglich eine Öffnungsbewegung des Ventilkörpers 15 bewirkt. Umgekehrt führt ein Öffnen der Drossel 19 zu einer Verminderung des Referenzdrucks im zweiten Teilvolumen 13, wodurch der Ventilkörper 15 eine Schließbewegung ausführt, was wiederum in einer Verminderung des Drucks in der Treibstoffzuführleitung 3 resultiert.

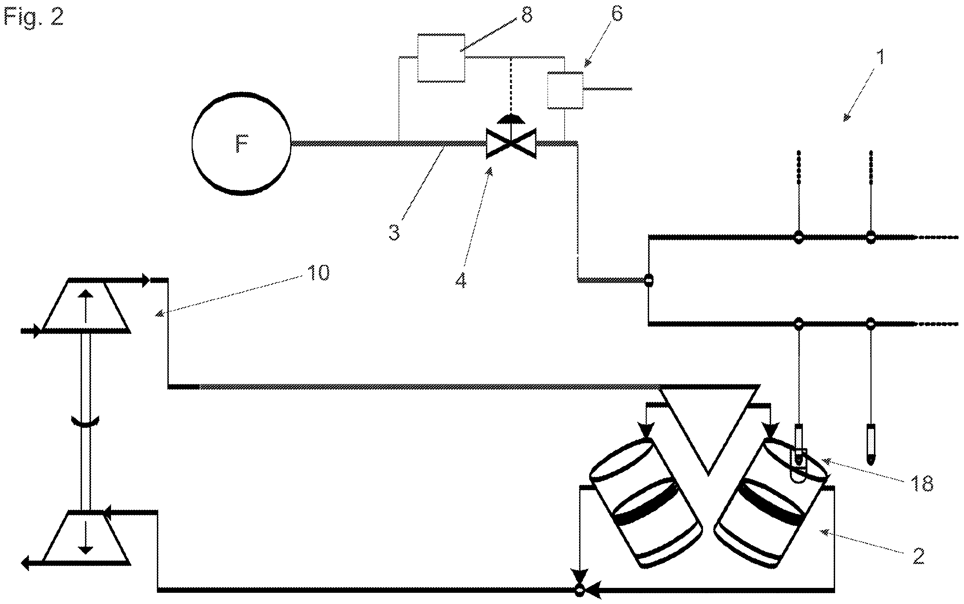

Fig. 2 zeigt die Ausführungsform nach Fig. 1 in einer schematischen Darstellung der Brennkraftmaschine 1. Neben dem Turbolader 10, welcher einen Ladedruck zum Versorgen der Brennkammern 2 in Form von Kolben-Zylinder-Einheiten bereitstellt, sind das vergleichende Drucksteuerventil 4 in der zumindest einen Treibstoffzufuhrleitung 3 sowie das Pilotsteuerventil 8 und das erfindungsgemäße Entlastungsventil 6 symbolisch dargestellt. Bei den meisten Brennkraftmaschinen 1 dieser Art ist der Druck in der zumindest einen Treibstoffzufuhrleitung 3 stets größer als der Ladedruck.

Mit Bezugszeichen F ist ein Treibstoffreservoir bezeichnet, das in diesem Ausführungsbeispiel als Gasdruckbehälter ausgeführt ist.

Die Zufuhr der vom Turbolader 10 erzeugten Ladeluft zu den Kolben-Zylinder-Einheiten geschieht über einen symbolisch dreieckig dargestellten Verteilerraum.

Davon separat ist jede Kolbenzylindereinheit mit einem Direkteinspritz- oder Direkteinblasventil 18 (Port-Injection-Ventil 18) ausgestattet.

Dabei ist zu erwähnen, dass der Treibstoff, vorzugsweise gasförmiger Treibstoff, mittels Port-Injection-Ventil 18 im Bereich des sogenannten 'Intake-Ports' eingedüst wird.

Die korrekte Funktionsweise des Direkteinspritzventils bzw. Direkteinblasventils 18 erfordert, dass das Verhältnis zwischen dem Druck in der zumindest einen Treibstoffzufuhrleitung 3 und dem Ladedruck einen gewissen Wert nicht übersteigt.

Ohne das erfindungsgemäße Entlastungsventil 6 kann es vorkommen, dass der Ladedruck so schnell sinkt (beispielsweise wegen eines größeren Lastabwurfs), dass die Regelstrecke für den Druck in der zumindest einen Treibstoffzufuhrleitung 3 zu träge ist. Das angesprochene Verhältnis wird dann zu groß, sodass die Port Injection Ventile 18 nicht mehr öffnen, wodurch natürlich der ordnungsgemäße Betrieb der Brennkraftmaschine 1 gestört ist.

Das erfindungsgemäße Entlastungsventil 6 sorgt für einen schnellen Angleich des Referenzdrucks und damit des Drucks in der zumindest einen Treibstoffzufuhrleitung 3, wodurch die erwähnten Aussetzer verhindert werden. In weiterer Folge verbraucht die Brennkraftmaschine 1 überschüssigen Treibstoff aus der zumindest einen Treibstoffzufuhrleitung 3 bis das Gleichgewicht in der zumindest einen Treibstoffzufuhrleitung 3 wiederhergestellt ist.

## Patentansprüche

1. Brennkraftmaschine mit
- zumindest einem Brennraum (2),
- zumindest einer Treibstoffzufuhrleitung (3) zum Zuführen von - vorzugsweise gasförmigem - Treibstoff zum zumindest einen Brennraum (2) sowie
- zumindest einem vergleichenden Drucksteuerventil (4) zum Steuern eines Drucks in der zumindest einen Treibstoffzufuhrleitung (3), wobei das zumindest eine vergleichende Drucksteuerventil (4) dazu ausgebildet ist, auf Basis eines Druckunterschieds zwischen der zumindest einen Treibstoffzufuhrleitung (3) und einem Referenzvolumen (5), in welchem ein Referenzdruck herrscht, eine Ventilöffnungsbewegung oder eine Ventilschließbewegung auszuführen,
wobei zumindest ein vom zumindest einen vergleichenden Drucksteuerventil (4) separates Entlastungsventil (6) vorgesehen ist, welches dazu ausgebildet ist, durch Öffnen eine Druckentlastung im Referenzvolumen (5) und damit eine Verringerung des Referenzdrucks zu bewirken, wenn eine von der Brennkraftmaschine (1) zu erbringende Leistung sinkt, **dadurch gekennzeichnet, dass** der Referenzdruck im Referenzvolumen (5) mittels eines vom Entlastungsventil (6) separaten Pilotsteuerventils (8) steuerbar oder regelbar ist, wobei das Pilotsteuerventil (8) in einer Umgehungsleitung (9) des zumindest einen vergleichenden Drucksteuerventils (4) angeordnet ist, wobei die Umgehungsleitung (9) stromaufwärts des zumindest einen vergleichenden Drucksteuerventils (4) mit der zumindest einen Treibstoffzufuhrleitung (3) fluidverbunden ist.

2. Brennkraftmaschine nach Anspruch 1, **dadurch gekennzeichnet, dass** das zumindest eine Entlastungsventil (6) so angeordnet ist, dass das Referenzvolumen (5) im geöffneten Zustand des zumindest einen Entlastungsventils (6) in Fluidkommunikation mit der Umgebung steht.

3. Brennkraftmaschine nach einem der vorhergehenden Ansprüche, **dadurch gekennzeichnet, dass** das durchströmte Referenzvolumen (5) eine Drossel - vorzugsweise eine Blende - zum Drosseln eines Volumenstroms beinhaltet und dass das zumindest eine Entlastungsventil (6) in einer Drosselumgehungsleitung um die Drossel angeordnet ist.

4. Brennkraftmaschine nach einem der vorhergehenden Ansprüche, **dadurch gekennzeichnet, dass** eine Steuer- oder Regeleinrichtung (7) vorgesehen ist.

5. Brennkraftmaschine nach Anspruch 4, **dadurch gekennzeichnet, dass** das zumindest eine Entlastungsventil (6) mittels der Steuer- oder Regeleinrichtung (7) elektronisch ansteuerbar ist.

6. Brennkraftmaschine nach einem der vorhergehenden Ansprüche, **dadurch gekennzeichnet, dass** eine elektronische Ansteuerung des Pilotsteuerventils (8) gemäß einem Soll-Wert vorgesehen ist.

7. Brennkraftmaschine nach Anspruch 6, **dadurch gekennzeichnet, dass** die Umgehungsleitung (9) stromaufwärts und stromabwärts des zumindest einen vergleichenden Drucksteuerventils (4) mit der zumindest einen Treibstoffzufuhrleitung (3) fluidverbunden ist.

8. Brennkraftmaschine nach einem der vorhergehenden Ansprüche, **dadurch gekennzeichnet, dass** zumindest ein Turbolader (10) vorgesehen ist.

9. Brennkraftmaschine nach den Ansprüchen 4 und 8, **dadurch gekennzeichnet, dass** die Steuer- oder Regeleinrichtung (7) dazu ausgebildet ist, den Soll-Wert für das Ansteuern des Pilotsteuerventils (8) auf Basis eines durch den Turbolader (10) erzeugten Ladedrucks vorzugeben.

10. Brennkraftmaschine nach einem der vorhergehenden Ansprüche, **dadurch gekennzeichnet, dass** das vergleichende Drucksteuerventil (4) als mechanisch angesteuertes Drucksteuerventil ausgebildet ist.

11. Brennkraftmaschine nach einem der vorhergehenden Ansprüche, **dadurch gekennzeichnet, dass** das zumindest eine vergleichende Drucksteuerventil (4) eine zweigeteilte Druckkammer (11) aufweist, wobei ein erstes Teilvolumen (12) der Druckkammer (11) mit der zumindest einen Treibstoffzufuhrleitung (3) fluidverbunden ist und ein zweites Teilvolumen (13) der Druckkammer (11) Teil des Referenzvolumens (5) ist.

12. Brennkraftmaschine nach Anspruch 9, **dadurch gekennzeichnet, dass** die Zweiteilung der Druckkammer (11) durch eine - vorzugsweise federbelastete - bewegliche Trennwand (14) realisiert ist, wobei die Trennwand (14) mit einem Ventilkörper (15) oder einem Ventilsitz (16) des zumindest einen vergleichenden Drucksteuerventils (4) bewegungsgekoppelt ist.

13. Brennkraftmaschine nach Anspruch 11 oder 12, **dadurch gekennzeichnet, dass** die Fluidverbindung zwischen dem ersten Teilvolumen (12) der Druckkammer (11) und der zumindest einen Treibstoffzufuhrleitung (3) durch eine Steuerleitung (17) realisiert ist, welche das erste Teilvolumen (12) der Druckkammer (11) stromabwärts des Ventilsitzes (16) und des Ventilkörpers (15) mit dem der zumindest einen Treibstoffzufuhrleitung (3) fluidverbindet.

14. Brennkraftmaschine nach einem der vorhergehenden Ansprüche, **dadurch gekennzeichnet, dass** eine Treibstoffzufuhr zum zumindest einen Brennraum (2) mittels zumindest eines Direkteinspritzventils (18) realisiert ist, welches zumindest eine Direkteinspritzventil (18) zur Treibstoffversorgung mit der zumindest einen Treibstoffzufuhrleitung (3) fluidverbunden ist.

15. Genset mit einer Brennkraftmaschine nach einem der vorhergehenden Ansprüche.

## Claims

1. Internal combustion engine with
- at least one combustion chamber (2),
- at least one fuel supply line (3) for supplying - preferably gaseous - fuel to the at least one combustion chamber (2) and
- at least one comparative pressure control valve (4) for controlling a pressure in the at least one fuel supply line (3), wherein the at least one comparative pressure control valve (4) is formed to carry out a valve opening movement or a valve closing movement on the basis of a pressure difference between the at least one fuel supply line (3) and a reference volume (5) in which a reference pressure prevails,
wherein
at least one relief valve (6) is provided that is separate from the at least one comparative pressure control valve (4) and is formed to bring about a pressure relief in the reference volume (5) by opening and thus to bring about a reduction of the reference pressure when a power to be produced by the internal combustion engine (1) drops, **characterized in that** the reference pressure in the reference volume (5) can be controlled or regulated by means of a pilot control valve (8) that is separate from the relief valve (6), wherein the pilot control valve (8) is arranged in a bypass line (9) of the at least one comparative pressure control valve (4), wherein the bypass line (9) is fluidly connected to the at least one fuel supply line (3) upstream of the at least one comparative pressure control valve (4).

2. Internal combustion engine according to claim 1, **characterized in that** the at least one relief valve (6) is arranged such that the reference volume (5) is in fluid communication with the surroundings in the open state of the at least one relief valve (6).

3. Internal combustion engine according to one of the preceding claims, **characterized in that** the reference volume (5) which is flowed through contains a restrictor - preferably a diaphragm - for restricting a volumetric flow and **in that** the at least one relief valve (6) is arranged in a restrictor bypass line around the restrictor.

4. Internal combustion engine according to one of the preceding claims, **characterized in that** a controller or regulator (7) is provided.

5. Internal combustion engine according to claim 4, **characterized in that** the at least one relief valve (6) can be actuated electronically by means of the controller or regulator (7).

6. Internal combustion engine according to one of the preceding claims, **characterized in that** an electronic actuation of the pilot control valve (8) is provided according to a target value.

7. Internal combustion engine according to claim 6, **characterized in that** the bypass line (9) is fluidly connected to the at least one fuel supply line (3) upstream and downstream of the at least one comparative pressure control valve (4).

8. Internal combustion engine according to one of the preceding claims, **characterized in that** at least one turbocharger (10) is provided.

9. Internal combustion engine according to claims 4 and 8, **characterized in that** the controller or regulator (7) is formed to specify the target value for the actuation of the pilot control valve (8) on the basis of a boost pressure generated by the turbocharger (10).

10. Internal combustion engine according to one of the preceding claims, **characterized in that** the comparative pressure control valve (4) is formed as a mechanically actuated pressure control valve.

11. Internal combustion engine according to one of the preceding claims, **characterized in that** the at least one comparative pressure control valve (4) has a pressure chamber (11) divided into two, wherein a first partial volume (12) of the pressure chamber (11) is fluidly connected to the at least one fuel supply line (3) and a second partial volume (13) of the pressure chamber (11) is part of the reference volume (5).

12. Internal combustion engine according to claim 9, **characterized in that** the division into two of the pressure chamber (11) is realized by a - preferably spring-loaded - movable dividing wall (14), wherein the dividing wall (14) is movement-coupled to a valve body (15) or a valve seat (16) of the at least one comparative pressure control valve (4).

13. Internal combustion engine according to claim 11 or 12, **characterized in that** the fluid connection between the first partial volume (12) of the pressure chamber (11) and the at least one fuel supply line (3) is realized by a control line (17), which fluidly connects the first partial volume (12) of the pressure chamber (11) to that of the at least one fuel supply line (3) downstream of the valve seat (16) and the valve body (15).

14. Internal combustion engine according to one of the preceding claims, **characterized in that** a supply of fuel to the at least one combustion chamber (2) is realized by means of at least one direct injection valve (18), which at least one direct injection valve (18) is fluidly connected to the at least one fuel supply line (3) for the supply of fuel.

15. Genset with an internal combustion engine according to one of the preceding claims.

## Revendications

1. Moteur à combustion interne avec
- au moins une chambre de combustion (2),
- au moins une conduite d'amenée de carburant (3) pour amener du carburant - de préférence gazeux - vers la au moins une chambre de combustion (2) ainsi que
- au moins une soupape de commande de pression (4) de comparaison pour commander une pression dans la au moins une conduite d'amenée de carburant (3), dans lequel la au moins une soupape de commande de pression (4) de comparaison est conçue pour exécuter sur la base d'une différence de pression entre la au moins une conduite d'amenée de carburant (3) et un volume de référence (5) dans lequel une pression de référence règne un mouvement d'ouverture de soupape ou un mouvement de fermeture de soupape,
dans lequel au moins une soupape de décharge (6) séparée de la au moins une soupape de commande de pression (4) de comparaison est prévue, laquelle est conçue pour provoquer par ouverture une décharge de pression dans le volume de référence (5) et ainsi une réduction de la pression de référence, lorsqu'une puissance destinée à être fournie par le moteur à combustion interne (1) diminue, **caractérisé en ce que**
la pression de référence dans le volume de référence (5) peut être commandée ou peut être régulée au moyen d'une soupape de commande pilote (8) séparée de la soupape de décharge (6), dans lequel la soupape de commande pilote (8) est disposée dans une conduite de dérivation (9) de la au moins une soupape de commande de pression (4) de comparaison, dans lequel la conduite de dérivation (9) en amont de la au moins une soupape de commande de pression (4) de comparaison est en liaison fluidique avec la au moins une conduite d'amenée de carburant (3).

2. Moteur à combustion interne selon la revendication 1, **caractérisé en ce que** la au moins une soupape de décharge (6) est disposée de sorte que le volume de référence (5) dans l'état ouvert de la au moins une soupape de décharge (6) est en communication fluidique avec l'environnement.

3. Moteur à combustion interne selon l'une quelconque des revendications précédentes, **caractérisé en ce que** le volume de référence (5) traversé comporte un étranglement - de préférence un obturateur - pour étrangler un débit volumique et que la au moins une soupape de décharge (6) est disposée dans une conduite de dérivation d'étranglement autour de l'étranglement.

4. Moteur à combustion interne selon l'une quelconque des revendications précédentes, **caractérisé en ce qu'**un dispositif de commande ou de régulation (7) est prévu.

5. Moteur à combustion interne selon la revendication 4, **caractérisé en ce que** la au moins une soupape de décharge (6) peut être commandée électroniquement au moyen du dispositif de commande ou de régulation (7).

6. Moteur à combustion interne selon l'une quelconque des revendications précédentes, **caractérisé en ce qu'**une commande électronique de la soupape de commande pilote (8) conformément à une valeur de consigne est prévue.

7. Moteur à combustion interne selon la revendication 6, **caractérisé en ce que** la conduite de dérivation (9) en amont et en aval de la au moins une soupape de commande de pression (4) de comparaison est en liaison fluidique avec la au moins une conduite d'amenée de carburant (3).

8. Moteur à combustion interne selon l'une quelconque des revendications précédentes, **caractérisé en ce qu'**au moins un turbocompresseur (10) est prévu.

9. Moteur à combustion interne selon les revendications 4 et 8, **caractérisé en ce que** le dispositif de commande ou de régulation (7) est conçu pour prédéfinir la valeur de consigne pour la commande de la soupape de commande pilote (8) sur la base d'une pression de suralimentation produite par le turbocompresseur (10).

10. Moteur à combustion interne selon l'une quelconque des revendications précédentes, **caractérisé en ce que** la soupape de commande de pression (4) de comparaison est conçue en tant que soupape de commande de pression commandée mécaniquement.

11. Moteur à combustion interne selon l'une quelconque des revendications précédentes, **caractérisé en ce que** la au moins une soupape de commande de pression (4) de comparaison présente une chambre de pression (11) divisée en deux, dans lequel un premier volume partiel (12) de la chambre de pression (11) est en liaison fluidique avec la au moins une conduite d'amenée de carburant (3) et un deuxième volume partiel (13) de la chambre de pression (11) fait partie du volume de référence (5).

12. Moteur à combustion interne selon la revendication 9, **caractérisé en ce que** la division en deux de la chambre de pression (11) est réalisée par une cloison (14) mobile - de préférence sollicitée par un ressort -, dans lequel la cloison (14) est accouplée en mouvement à un corps de soupape (15) ou un siège de soupape (16) de la au moins une soupape de commande de pression (4) de comparaison.

13. Moteur à combustion interne selon la revendication 11 ou 12, **caractérisé en ce que** la liaison fluidique entre le premier volume partiel (12) de la chambre de pression (11) et la au moins une conduite d'amenée de carburant (3) est réalisée par une conduite de commande (17), laquelle relie de manière fluidique le premier volume partiel (12) de la chambre de pression (11) en aval du siège de soupape (16) et du corps de soupape (15) à la au moins une conduite d'amenée de carburant (3).

14. Moteur à combustion interne selon l'une quelconque des revendications précédentes, **caractérisé en ce qu'**une amenée de carburant vers la au moins une chambre de combustion (2) est réalisée au moyen d'au moins une soupape à injection directe (18), laquelle au moins une soupape à injection directe (18) pour l'alimentation en carburant est reliée fluidiquement à la au moins une conduite d'amenée de carburant (3).

15. Ensemble moteur-générateur avec un moteur à combustion interne selon l'une quelconque des revendications précédentes.
